# EUROPEAN PATENT APPLICATION

(11) **EP 3 282 395 A1**
(43) Date of publication of application: **14.02.2018**
(21) Application number: 16460054.6
(22) Date of filing: 09.08.2016
(51) Int. Cl.: G06K 19/07, A47G 19/03, B32B 27/10, B65D 1/34

(54) **PACKAGING FOR FOOD PRODUCTS**

(71) Applicant: POMONA Company Ltd. Sp. z o.o., 96-300 Zyrardow (PL)
(72) Inventor: MACKIEWICZ, Aleksander, 05-085 Kampinos (PL)
(74) Representative: Kaminski, Zbigniew

(57) **Abstract**

The present invention relates to the safety cartridge for food products, in particular fresh meat or fish, protecting them against unauthorized taking out from the point of sale, characterized in that it has the form of a sachet welded from four sides on the edges (1', 1", 1"', 1"", 2, 2", 2"', 2""), inside which there is a signalling element (3), whereby the sachet is made of a cellulosic material approved for contact with food.

## Description

The present invention relates to safety cartridge for food products, such as meat or fish.

There are known cartridges for protecting food products placed in the container against spoilage caused by substances, especially chemical, secreted by the stored products, and inserts to prevent theft.

Various methods are known to protect products against theft. One securing method is sticking of the labels having an antenna or chip on the packing of a food product. The disadvantage of this solution is a possibility of rapid detachment of the label from a packing. Another way is sticking of labels with an antenna or chip directly on the food product before it is placed in the box, but the drawback of this solution is the fact that the label is coated with an adhesive, which directly affects the food product.

Food containers should therefore be fitted with a sealed cartridges, completely isolated from the protected food and equipped with chips to prevent unauthorized manipulation of containers, for example taking the container out from the warehouse or point of sale, which also takes place in warehouses before lining product on shop counters.

The Polish patent application No. P.404178 discloses an absorbing cartridge for storing of food product. As demonstrated by the tests, this cartridge considerably eliminates the possibility of spoilage of products, especially products having a short shelf-life.
The above-mentioned solutions are useful for storage of food products at a specific time, but are not suitable to protect the packing of fresh foods, for example meat, at direct sale.

The aim of the invention is to contribute to food products security and to protect them against unauthorized taking out from the store or point of sale.

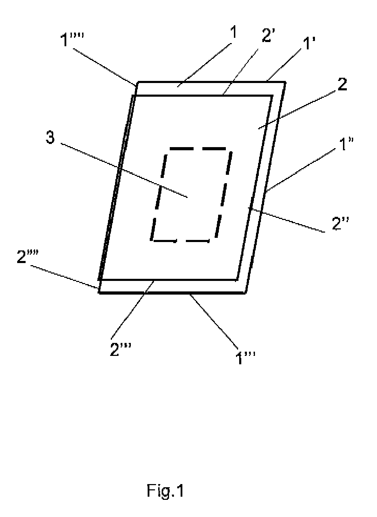

This objective is realized by providing a safety cartridge for food products, especially fresh ones, according to the preamble of claim No.1. A signalling element of the cartridge is preferably protected against detrimental influences of stored foodstuffs.
A signalling element is preferably an electronic micro-chip or magnetic chip.
A signalling element is preferably a radio antenna or semiconductor diode.
An embodiment of the invention will now be described, by way of example, with reference to the accompanying drawing.

The safety cartridge preventing the foodstuffs from unauthorized taking out from the point of sale, according to the drawing, has the form of a sachet consisting of two panels 1, 2 with edges 1', 1", 1'", 1"", 2, 2", 2"', 2"", which are tightly bonded by welding. Between the panels 1, 2 a chamber is formed, in which a signalling element 3 is placed. It can be a substantially any element, which is detectable by the security gates in warehouses or retail stores. This may be a semiconductor diode, electronic or magnetic chip, or a strip of metal constituting the antenna. The surfaces of the panels 1 and 2 are covered on the outside with cellulose material approved by the standards for contact with food, especially fresh, and from the inside with cellulose material coated with a weldable polyethylene.

## Claims

1. Safety cartridge for food products, in particular fresh meat or fish, protecting them against unauthorized taking out from the point of sale, **characterized in that** it has the form of a sachet welded from four sides on the edges (1', 1", 1"', 1"", 2, 2". 2"', 2""), inside which there is a signalling element (3), whereby the sachet is made of a cellulosic material approved for contact with food.

2. Safety cartridge according to claim 1, **characterized in that** the signalling element (3) is protected against detrimental influences of stored foodstuffs.

3. Safety cartridge according to the claim 1, **characterized in that** the signalling element (3) is an electronic microchip.

4. Safety cartridge according to the claim 1, **characterized in that** the signalling element (3) is a magnetic chip.

5. Safety cartridge according to the claim 1, **characterized in that** the signalling element (3) is a radio antenna.

6. Safety cartridge according to the claim 1, **characterized in that** the signalling element (3) is a semiconductor diode.
